# EUROPEAN PATENT APPLICATION

(11) **EP 4 685 752 A1**
(43) Date of publication of application: **28.01.2026**
(21) Application number: 24774109.3
(22) Date of filing: 19.03.2024
(51) Int. Cl.: G06T 19/20

(54) **METHOD AND APPARATUS FOR EDITING VIRTUAL OBJECT, DEVICE, MEDIUM AND PROGRAM**

(30) Priority: 20.03.2023 CN 202310281193
(71) Applicant: Beijing Zitiao Network Technology Co., Ltd., Beijing 100190 (CN)
(72) Inventor: WANG, Kexin, Beijing 100028 (CN)
(74) Representative: Isarpatent
(86) International application number: PCT/CN2024/082457
(87) International publication number: WO 2024/193544

(57) **Abstract**

A method and apparatus for editing a virtual object, a device, a medium and a program. The method comprises: displaying an edit control and a virtual object; in response to a connection instruction for the editing control and the virtual object, associating the editing control with the virtual object; and editing the virtual object according to editing content corresponding to the editing control. In the described method, the editing control and the virtual object are displayed, so that a user only needs to connect the editing control with the virtual object to complete editing of the virtual object, such that editing of the virtual object is simple editing, thus improving user experience.

## Description

The present application claims priority to Chinese Patent Application No. 202310281193.1 filed on March 20, 2023, which is incorporated herein by reference in its entirety as a part of the present application.

### TECHNICAL FIELD

Embodiments of the present application relate to a method for editing a virtual object, an apparatus, a device, a medium, and a program.

### BACKGROUND

Extended Reality (XR) refers to a combination of reality and virtuality by using a computer to create a virtual environment that can be used for human-computer interaction. XR is also a collective term for various technologies such as virtual reality (VR), augmented reality (AR), and mixed reality (MR). By integrating visual interaction technologies of the three, an experience of seamless switching between a virtual world and a reality world is brought to users.

In an XR scenario, to meet personalized requirements of users, a user generated content (UGC) function is added, that is, users can customize a virtual object by using elements such as a material in a provided editor based on their own requirements. The virtual object customized by users needs to be provided with a logic (that is, code). After the logic is provided for the virtual object, the virtual object can perform a corresponding behavior. In some examples, after the virtual object is created, logic of the virtual object is created in an attribute panel of the virtual object.

However, in the foregoing example, logic creation is inflexible and creation efficiency is low.

### SUMMARY

An embodiment of the present application provides a method for editing a virtual object, an apparatus, a device, a medium, and a program.

According to a first aspect, an embodiment of the present application provides a method for editing a virtual object. The method includes:
displaying an edit control and a virtual object;
associating the edit control with the virtual object in response to a connection instruction for the edit control and the virtual object; and
editing the virtual object based on edit content corresponding to the edit control.

In some embodiments, after the associating the edit control with the virtual object, the method further includes:
displaying information about the edit control at the virtual object.

In some embodiments, the information about the edit control includes at least one of the following: the edit control, a thumbnail of the edit control, a name of the edit control, or identification information of the edit control.

In some embodiments, the displaying the information about the edit control at the virtual object includes:
determining a position or a pose of the information about the edit control based on a position or a pose of the virtual object; and
displaying the information about the edit control based on the position or the pose of the information about the edit control.

In some embodiments, the associating the edit control with the virtual object in response to the connection instruction for the edit control and the virtual object includes:
controlling the edit control to move in response to a movement instruction for the edit control; and
associating the edit control with the virtual object in response to a detection that the edit control overlaps the virtual object.

In some embodiments, the edit control has a connecting portion, and the connecting portion is configured to connect to a virtual object.

The associating the edit control with the virtual object in response to the detection that the edit control overlaps the virtual object includes:
associating the edit control with the virtual object in response to a detection that the connecting portion of the edit control overlaps the virtual object.

In some embodiments, each of the edit control and the virtual object has a connecting portion.

The associating the edit control with the virtual object in response to the connection instruction for the edit control and the virtual object includes:
connecting the connecting portion of the edit control to the connecting portion of the virtual object by using a connection line; and
hiding the connection line in response to a completion of the connecting.

In some embodiments, the method further includes:
canceling an association relationship between the edit control and the virtual object in response to a disconnection instruction for the edit control and the virtual object.

In some embodiments, when displaying the information about the edit control at the virtual object after the associating the edit control with the virtual object, the canceling the association relationship between the edit control and the virtual object in response to the disconnection instruction for the edit control and the virtual object includes:
controlling the edit control to move in response to a movement instruction for the edit control; and
canceling the association relationship between the edit control and the virtual object in response to a detection that the edit control does not overlap the virtual object.

In some embodiments, the edit control has a connecting portion, and the connecting portion overlaps the virtual object when the associating the edit control with the virtual object.

The canceling the association relationship between the edit control and the virtual object in response to the detection that the edit control does not overlap the virtual object includes:
canceling the association relationship between the edit control and the virtual object in response to a detection that the connecting portion of the edit control does not overlap the virtual object.

In some embodiments, the method further includes:
displaying a setting panel of the edit control in response to a first operation on the edit control; and
receiving edit content of the edit control that is inputted into the setting panel.

In some embodiments, the edit content corresponding to the edit control includes an editing instruction, and the editing the virtual object based on the edit content corresponding to the edit control includes:
determining an instruction corresponding to the virtual object based on the editing instruction corresponding to the edit control.

In some embodiments, the edit content corresponding to the edit control includes an editing parameter, and the editing the virtual object based on the edit content corresponding to the edit control includes:
setting a parameter of the virtual object based on the editing parameter corresponding to the edit control.

In some embodiments, after the associating the edit control with the virtual object, a display feature of the edit control changes.

In some embodiments, after the associating the edit control with the virtual object, the method further includes:
displaying prompt information indicating that the edit control is successfully associated with the virtual object.

According to another aspect, an embodiment of the present application provides an apparatus for editing a virtual object. The apparatus includes:
a display module configured to display an edit control and a virtual object;
an association module configured to associate the edit control with the virtual object in response to a connection instruction for the edit control and the virtual object; and
an editing module configured to edit the virtual object based on edit content corresponding to the edit control.

According to another aspect, an embodiment of the present application provides an electronic device. The electronic device includes a processor and a memory. The memory is configured to store a computer program, and the processor is configured to invoke and run the computer program stored in the memory to perform the method according to any one of the above aspects.

According to another aspect, an embodiment of the present application provides a computer-readable storage medium. The computer-readable storage medium is configured to store a computer program, and the computer program causes a computer to perform the method according to any one of the above aspects.

According to another aspect, an embodiment of the present application provides a computer program product. The computer program product includes a computer program, and when the computer program is executed by a processor, the method according to any one of the above aspects is implemented.

### BRIEF DESCRIPTION OF DRAWINGS

To describe the technical solutions in the embodiments of the present invention more clearly, the following briefly introduces the drawings required for describing the embodiments. Apparently, the drawings in the following description show merely some embodiments of the present invention, and a person of ordinary skill in the art may still derive other drawings from these drawings without creative efforts.
FIG. 1 is a flowchart of a method for editing a virtual object according to embodiment one of the present application;
FIG. 2 is a schematic diagram of an edit control and a setting panel of the edit control;
FIG. 3 is a schematic diagram of a positional relationship between a bounding box of a connecting portion of the edit control and a virtual object;
FIG. 4 is a schematic diagram of association between the edit control and three different virtual objects;
FIG. 5 is a flowchart of a method for editing a virtual object according to embodiment two of the present application;
FIG. 6 is a schematic diagram of display of information about the edit control of the virtual object;
FIG. 7 is a flowchart of a method for editing a virtual object according to embodiment three of the present application;
FIG. 8 is a schematic diagram of switching of the edit control between different virtual objects;
FIG. 9 is a schematic diagram of a structure of an apparatus for editing a virtual object according to embodiment four of the present application; and
FIG. 10 is a schematic diagram of a structure of an electronic device according to embodiment five of the present application.

DETAILED DESCRIPTION

The technical solutions in the embodiments of the present invention are clearly and completely described in the following with reference to the drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be noted that the terms "first" and "second" in the specification and claims of the present invention and the above drawings are used to distinguish between similar objects, but are not necessarily used to describe a specific order or sequence. It should be understood that the data described in this manner may be interchanged in appropriate circumstances, so that the embodiments of the present invention described herein may be implemented in a sequence other than the sequence illustrated or described herein. In addition, the terms "include/comprise" and "have" and any variations thereof are intended to cover non-exclusive inclusion. For example, a process, method, system, product, or server that includes a series of steps or units is not necessarily limited to those clearly listed steps or units, but may include other steps or units not clearly listed or inherent to these processes, methods, products, or devices.

To facilitate understanding of the embodiments of the present application, some concepts involved in all embodiments of the present application are first explained and described appropriately before the embodiments of the present application are described. Details are as follows.

XR is a collective term for VR, AR, and AR technologies. XR devices include, but are not limited to, VR devices, AR devices, and MR devices.

VR: a technology for creating and experiencing a virtual world. A virtual environment is generated by means of computing, and the virtual environment is multi-source information (the virtual reality mentioned herein at least includes visual perception, and may further include auditory perception, tactile perception, motion perception, and even gustatory perception, olfactory perception, and the like). The simulation of fused interactive three-dimensional dynamic scenes of the virtual environment and entity behaviors is implemented, so that a user is immersed in a simulated virtual reality environment, to implement applications in various virtual environments such as maps, games, videos, education, medical treatment, simulation, collaborative training, sales, assisted manufacturing, maintenance, and repair.

The VR device refers to a terminal that implements a virtual reality effect. Usually, the VR device may be provided in a form of eyeglasses, a head-mounted display (HMD), or a contact lens, to implement visual perception and other forms of perception. Certainly, a form implemented by the virtual reality device is not limited to this, and may be further miniaturized or enlarged based on a requirement.

AR: An AR setting refers to a simulated setting in which at least one virtual object is superimposed on a physical setting or a representation thereof. For example, an electronic system may have an opaque display and at least one imaging sensor. The imaging sensor is configured to capture an image or a video of the physical setting. The image or the video is a representation of the physical setting. The system combines the image or the video with the virtual object, and displays the combination on the opaque display. An individual uses the system to indirectly view the physical setting by using the image or the video of the physical setting, and observes the virtual object superimposed on the physical setting. When the system uses one or more image sensors to capture the image of the physical setting and uses those images to present the AR setting on the opaque display, the displayed image is referred to as video pass-through. Alternatively, the electronic system used to display the AR setting may have a transparent or semi-transparent display, and the individual may directly view the physical setting by using the display. The system may display the virtual object on the transparent or semi-transparent display, so that the individual uses the system to observe the virtual object superimposed on the physical setting. For another example, the system may include a projection system that projects the virtual object onto the physical setting. The virtual object may be projected on a physical surface or as a hologram, for example, so that the individual uses the system to observe the virtual object superimposed on the physical setting. Specifically, a technique in which a camera pose parameter of a camera in a reality world (or a three-dimensional world or a reality world) is calculated in real time in a process of collecting an image by using the camera, and a virtual element is added to the image collected by using the camera based on the camera pose parameter. The virtual element includes, but is not limited to, an image, a video, and a three-dimensional model. A target of the AR technology is to sleeve the virtual world on the reality world and interact on a screen.

MR: An interactive feedback information loop is built between a reality world, a virtual world, and a user by presenting virtual scene information in a reality scene, to enhance a sense of reality of a user experience. For example, a sensory input (for example, a virtual object) created by a computer is integrated with a sensory input from a physical setting or a representation thereof into a simulated setting. In some MR settings, the sensory input created by the computer may be adapted to a change in the sensory input from the physical setting. In addition, some electronic systems used to present the MR setting may monitor an orientation and/or a position relative to the physical setting, so that the virtual object can interact with a physical object (that is, a physical element from the physical setting or a representation thereof). For example, the system may monitor motion, so that a virtual plant looks static relative to a physical building.

The virtual reality device (VR device) is a terminal that implements a virtual reality effect. Usually, the VR device may be provided in a form of eyeglasses, a head-mounted display (HMD), or a contact lens, to implement visual perception and other forms of perception. Certainly, a form implemented by the virtual reality device is not limited to this, and may be further miniaturized or enlarged based on an actual requirement.

Optionally, the virtual reality device (that is, the XR device) described in this embodiment of the present application may include, but are not limited to, the following types:
1) a mobile virtual reality device that supports setting a mobile terminal (such as a smartphone) in various manners (such as a head-mounted display provided with a dedicated card slot). The mobile terminal performs computing related to a virtual reality function through a wired or wireless connection to the mobile terminal, and outputs data to the mobile virtual reality device. For example, a virtual reality video is viewed by using an APP of the mobile terminal.
2) an all-in-one virtual reality device that has a processor for performing computing related to a virtual function, and therefore has an independent function of virtual reality input and output. The all-in-one virtual reality device does not need to be connected to a PC or the mobile terminal, and has a high degree of freedom in use.
3) a PC-end virtual reality (PCVR) device that uses a PC end to perform computing related to a virtual reality function and data output. An external PC-end virtual reality device uses data output by the PC end to implement a virtual reality effect.

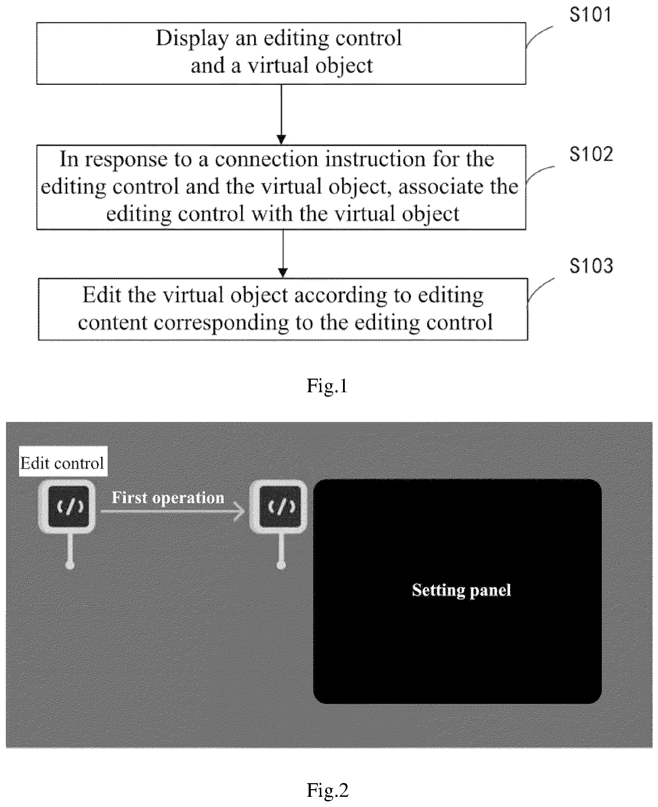

FIG. 1 is a flowchart of a method for editing a virtual object according to embodiment one of the present application. The method is applied to electronic devices such as an XR device, an electronic device, and a personal computer. This embodiment is mainly described by using an XR device as an example. As shown in FIG. 1, the method provided in this embodiment includes the following steps.

In S101, an edit control and a virtual object are displayed.

The virtual object may be an object in a virtual scene. The virtual scene may be a 3D extended reality scene provided by the XR device, or a 2D virtual scene provided by a mobile phone, a computer, or the like. The virtual object in the virtual scene may be an object, a prop, a control, or the like in the virtual scene. The object may be a plant, an animal, a building, or the like in the virtual scene.

The virtual object may be an object provided by a client, or an object defined by a user. Using the XR device as an example, to meet personalized requirements of users, a user generated content (UGC) function is added, that is, users can customize a virtual object in an editor provided by a game based on their own requirements. The virtual object customized by users is also referred to as a UGC object.

The editor can provide some editing elements such as a polyhedron, a control, a material, physics, logic, music, a sound effect, a special effect, and a material for users to use, and users can customize a virtual object in the editor. Customization in this embodiment of the present application may be understood as that a user independently builds and forms a virtual object in the editor by using editing elements provided by the editor.

In creating a model or an appearance of the virtual object, the user also needs to provide or set logic for the virtual object. After the logic is provided for the virtual object, the virtual object can perform a corresponding behavior. The logic may be understood as code of a function corresponding to the logic.

Using a game scene as an example, the user hopes to implement a game effect of "a monster loses health when a player picks up a sword and strikes at the monster". The user needs to first build an appearance of the sword by using a 3D model, then build an appearance of the monster, write code related to "losing health" and "attack power", and then associate the two pieces of code with the models of the sword and the monster, respectively. The code related to "losing health" and "attack power" may be understood as logic corresponding to a "losing health" function and logic corresponding to an "attack power" function.

In some examples, when the logic is set for the virtual object, an attribute panel of the virtual object usually needs to be opened, and code is written in the attribute panel to implement corresponding logic.

In this embodiment, the logic of the virtual object is embodied as an edit control. In the 3D scene, the edit control may be a 2D or 3D model. In the 2D scene, the edit control is a 2D model. When the edit control is used to set the logic for the virtual object, the edit control is also referred to as a logic control. The edit control may represent one or more pieces of logic.

It may be understood that in this embodiment, the edit control can be used not only to set the logic for the virtual object, but also to perform other editing on the virtual object, for example, editing an appearance or a special effect of the virtual object.

The edit control and the virtual object are separately created. After the separate creation, the edit control is associated with the virtual object, so that the virtual object is edited based on edit content corresponding to the edit control.

The edit control and the virtual object may be created by using the foregoing editor, or may be created by using different editors. The edit control and the virtual object may be created by a same user, or may be created by different users, which is not limited in this embodiment of the present application.

Exemplarily, the user may trigger, in the following scenarios, setting the logic for the virtual object.

Scene 1: After the creation of the appearance of the virtual object is completed, the logic is set for the virtual object.

The user may create the virtual object in a first creation page of the virtual object. After the creation of the virtual object is completed, the edit control is opened through an entrance in the first creation page, and the edit control and the virtual object are displayed in the first creation page. In the first creation page, the user selects, for the virtual object, the edit control that needs to be associated.

One or more different edit controls may be displayed in the first creation page for the user to use. Different edit controls correspond to different pieces of logic, and the user can distinguish between the logic by using appearances of the edit controls. The different edit controls may be distinguished by using colors, identifications, sizes, or the like of the edit controls.

Scene 2: After the creation of the edit control is completed, whether the logic of the edit control is valid is verified.

The user may create the edit control in a second creation page of the edit control. After the creation of the edit control is completed, the virtual object is opened through an entrance in the second creation page, and the edit control and the virtual object are displayed in the first creation page.

Scene 3: The user sets or modifies the logic for the virtual object in the virtual scene in a process of creating the virtual scene.

Scene 4: The user sets or modifies the logic for the virtual object when playing in the virtual scene.

In the different scenes, the edit control and the virtual object are displayed in different editing spaces. The editing space may be a 2D space or a 3D space.

Optionally, in the creation process of the edit control, an appearance of the edit control may be created first, and after the appearance of the edit control is created, the edit content of the edit control is written.

Optionally, after the edit content of the edit control is written, the user may further modify the content of the edit control.

Exemplarily, the edit content of the edit control is written or modified in the following manner: a setting panel of the edit control is displayed in response to a first operation on the edit control, and the edit content of the edit control that is inputted into the setting panel is received. The first operation may be an operation such as a click, a double-click, a long press, or a hover on the edit control.

FIG. 2 is a schematic diagram of an edit control and a setting panel of the edit control. As shown in FIG. 2, the edit control is a 3D object with a connecting rod. It may be understood that FIG. 2 is merely an example, and a shape of the edit control is not limited in this embodiment of the present application. After the user performs the first operation on the edit control, the setting panel shown in the figure appears. In the setting panel, code may be written or modified, and a parameter of the edit control may be set or modified.

In an implementation, the edit control and the virtual object have a binding relationship, that is, a certain edit control is developed for a specific virtual object, and the edit control can only be associated with the specific virtual object, but cannot be associated with another virtual object.

In another implementation, the edit control and the virtual object do not have a binding relationship, and the same edit control may be applied to a plurality of different virtual objects. In this implementation, the edit control may be reused by the plurality of virtual objects, so that resource waste caused by repeated development of a function corresponding to the edit control is avoided.

Optionally, subject defaults in the edit content corresponding to the edit control. When the edit content corresponding to the edit control is performed, the subject is the virtual object connected to the edit control. When the edit control is connected to different virtual objects, the user does not need to modify the subject of the edit control, and the subject corresponding to the edit control is automatically replaced with the connected virtual object, so that the edit control and the virtual object do not have a binding relationship.

In S102, the edit control is associated with the virtual object in response to a connection instruction for the edit control and the virtual object.

In an implementation, the connection instruction is a movement instruction for the edit control. The edit control is controlled to move in response to the movement instruction for the edit control. The edit control is associated with the virtual object in response to a detection that the edit control overlaps the virtual object.

In the moving process of the edit control, whether the edit control overlaps the virtual object is detected. Specifically, whether a bounding volume of the edit control overlaps a bounding volume of the virtual object may be detected. When the bounding volume of the edit control overlaps the bounding volume of the virtual object, it is determined that the edit control overlaps the virtual object.

The bounding box is also referred to as a bounding volume or a collision body. The bounding box may be considered as a transparent object that covers or surrounds all or some of the virtual object. The bounding box may be invisible to the user.

Optionally, the edit control has a connecting portion, and the connecting portion is configured to connect to a virtual object. Referring to FIG. 2, the connecting rod of the edit control shown in FIG. 2 is the connecting portion. Correspondingly, whether the connecting portion of the edit control overlaps the virtual object is detected. When the connecting portion of the edit control overlaps the virtual object, the edit control is associated with the virtual object.

Similarly, whether the bounding box of the connecting portion of the edit control overlaps the bounding box of the virtual object may be detected. When the bounding box of the connecting portion of the edit control overlaps the bounding box of the virtual object, it is determined that the connecting portion of the edit control overlaps the virtual object.

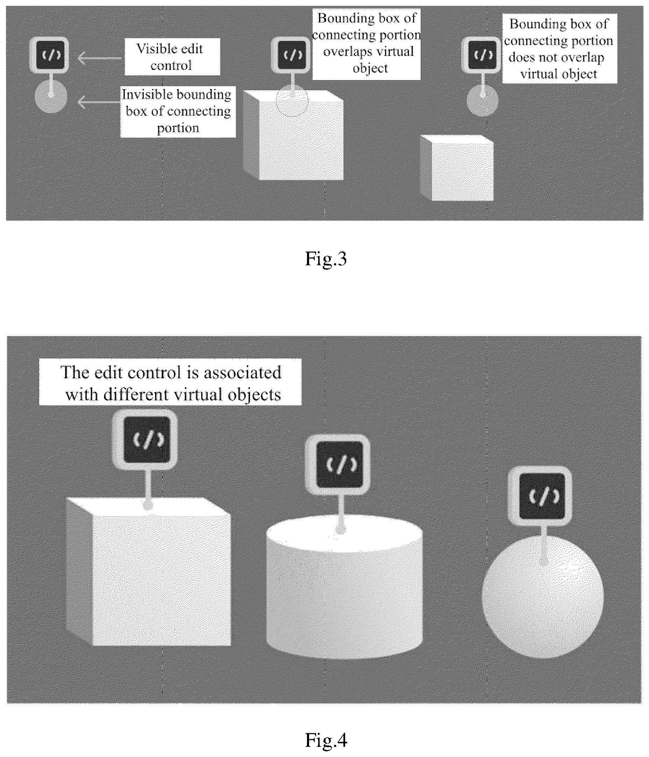

FIG. 3 is a schematic diagram of a positional relationship between a bounding box of a connecting portion of the edit control and a virtual object. As shown in FIG. 3, the bounding box of the connecting portion of the edit control is a 3D sphere, and the 3D sphere covers the connecting portion of the edit control. The edit control is moved. When the bounding box of the connecting portion of the edit control overlaps the virtual object, the edit control is associated with the virtual object. When the bounding box of the connecting portion of the edit control does not overlap the virtual object, the edit control is not associated with the virtual object.

In the connection manner shown in FIG. 3, similar to inserting the connecting portion of the edit control into the virtual object, the logic is set for the virtual object, and the operation process is more in line with an operation habit of the user in the reality scene, so that a better experience can be provided for the user.

The edit control is associated with the virtual object, indicating that the edit content corresponding to the edit control takes effect on the virtual object. Optionally, after the edit control is associated with the virtual object, a display feature of the edit control changes. That is, the display feature of the edit control is different before and after the association, so that the user can distinguish whether the edit control is successfully associated.

Exemplarily, the edit control has different colors before and after the edit control is associated with the virtual object. For example, the edit control is gray before the edit control is associated with the virtual object, and the edit control is colorful after the edit control is successfully associated with the virtual object. Alternatively, the edit control is normally displayed before the edit control is associated with the virtual object. When the edit control is successfully associated with the virtual object, the logic is highlighted, to inform the user that the edit control is successfully associated with the virtual object. After the highlighting is performed for a preset period of time, the normal display is restored.

Optionally, after the edit control is associated with the virtual object, the user may be prompted in text that the association is successful. For example, prompt information is displayed around the virtual object. The prompt information indicates that the edit control is successfully associated with the virtual object. The prompt information disappears after being displayed for a preset period of time, or the user actively closes the prompt information.

In this implementation, the connection instruction is the movement instruction for the edit control. In another embodiment of the present application, the connection instruction may alternatively be a movement instruction for the virtual object, that is, the virtual object is moved closer to the edit control. When it is detected that the edit control overlaps the virtual object, the edit control is associated with the virtual object. A specific implementation is similar, and details are not described herein again.

In another implementation, each of the edit control and the virtual object has a connecting portion. The connecting portion of the edit control is connected to the connecting portion of the virtual object by using a connection line. The connection line is hidden in response to a completion of the connection, to implement the association between the logic control and the virtual object.

The user may select the connection line by using a menu bar in the editing space, and then connect from the connecting portion of the edit control to the connecting portion of the virtual object.

Alternatively, a hover operation is performed on the connecting portion of the edit control. In response to the hover operation, a connection line is drawn, and the user drags a cursor to move an end of the connection line to the connecting portion of the virtual object. It may be understood that the connection line may alternatively be drawn from the connecting portion of the virtual object through the hover operation.

In this embodiment, the edit control and the virtual object are separately created, and the association between the edit control and the virtual object is conveniently implemented by using a UI interface. One edit control may be connected to a plurality of different virtual objects, to implement editing on the different virtual objects. FIG. 4 is a schematic diagram of association between the edit control and three different virtual objects. The user only needs to move the edit control to different virtual objects, to implement the association between the edit control and the virtual object, and the operation is convenient for the user.

In S103, the virtual object is edited based on the edit content corresponding to the edit control.

After the edit control is associated with the virtual object, the edit content of the edit control is read, and the virtual object is edited based on the edit content corresponding to the edit control, to complete the logic setting or another editing operation on the virtual object. It may be understood that the edit control may have the corresponding edit content before the edit control is associated with the virtual object, and the edit content of the edit control is read to edit the virtual object after the association. Alternatively, when the edit content corresponding to the edit control is newly created or modified after the edit control is associated with the virtual object, the edit content of the edit control is read to edit the virtual object.

In an implementation, the edit content corresponding to the edit control includes an editing instruction. Correspondingly, the instruction corresponding to the virtual object is determined based on the editing instruction corresponding to the edit control.

Exemplarily, when subject defaults in the editing instruction corresponding to the edit control, the subject that is default in the editing instruction is modified to the virtual object when the virtual object is edited by using the editing instruction, to obtain an executable editing instruction. The virtual object is edited by using the executable editing instruction, for example, the virtual object is driven to perform a corresponding action.

In another implementation, the edit content corresponding to the edit control includes an editing parameter. The parameter of the virtual object is set based on the editing parameter corresponding to the edit control.

Exemplarily, the editing parameter is used to add, delete, or modify a parameter of the virtual object. The parameter of the virtual object may be a physical parameter (such as a collision parameter, a motion parameter, or a gravity parameter) of the virtual object, a special effect, an appearance parameter (such as a pose parameter, a size parameter, a color parameter, a material parameter, or a brightness parameter) of the virtual object, a sound effect of the virtual object, or the like. The user may open the setting panel of the edit control, and set the editing parameter in the setting panel. After the virtual object is associated with the edit control, the parameter of the virtual object is set based on the editing parameter corresponding to the edit control.

For example, when the editing parameter of the edit control is a health loss amount, the user may set the health loss amount through the setting panel of the edit control. After the virtual object is associated with the edit control, the health loss amount of the virtual object is set based on the health loss amount of the edit control.

The parameter of the virtual object is set through the edit control. Only one modification needs to be performed on the editing parameter of the edit control, so that the parameters of the plurality of virtual objects associated with the edit control can be modified without separately modifying the parameter of each virtual object, and the efficiency of setting the parameter of the virtual object is improved.

In this embodiment, the edit control and the virtual object are displayed, the edit control is associated with the virtual object in response to the connection instruction for the edit control and the virtual object, and the virtual object is edited based on the edit content corresponding to the edit control. In this method, the edit control and the virtual object are displayed, and the user only needs to connect the edit control to the virtual object, so that the editing on the virtual object can be completed, the editing on the virtual object is simpler, and the user experience is improved.

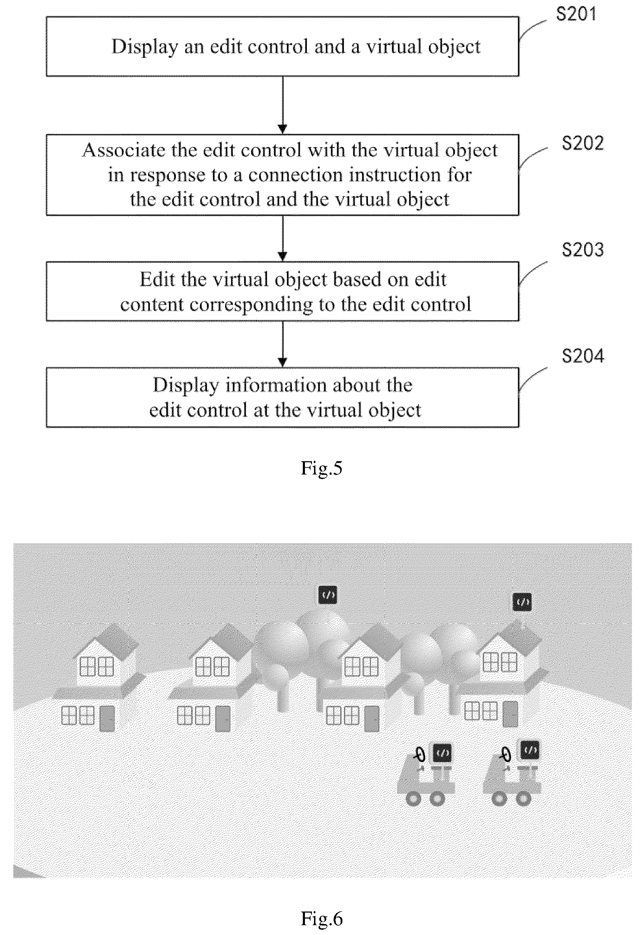

Based on embodiment one, embodiment two of the present application provides a method for editing a virtual object. After the virtual object is associated with the edit control, information about the edit control is displayed at the virtual object. For the same content as embodiment one, refer to the description in embodiment one and will not be repeated here. FIG. 5 is a flowchart of a method for editing a virtual object according to embodiment two of the present application. As shown in FIG. 5, the method provided in this embodiment includes the following steps.

In S201, an edit control and a virtual object are displayed.

In S202, the edit control is associated with the virtual object in response to a connection instruction for the edit control and the virtual object.

In S203, the virtual object is edited based on edit content corresponding to the edit control.

In S204, information about the edit control at the virtual object is displayed.

In some examples, after the logic is set for the virtual object, the user cannot intuitively perceive which virtual objects are provided with the logic and which virtual objects are not provided with the logic.

For example, the user creates a plurality of similar monsters, some of the monsters are provided with the logic, and some of the monsters are not provided with the logic. The user may forget which monsters are provided with the logic and which monsters are not provided with the logic. In this case, the user can only open attribute setting panels of the monsters one by one to check which monsters are not provided with the logic. The operation is cumbersome.

For another example, some logic is associated with different body parts (such as a head, a body, and an abdomen) of a virtual character, and the same effect is produced. After the user associates the logic with a specific part, the user easily forgets the part. If the logic needs to be modified, the user needs to open attribute setting panels of the parts one by one, and the operation is cumbersome.

In this embodiment, after the virtual object is associated with the edit control, the information about the edit control is displayed at the virtual object. The information about the edit control is always displayed, so that the user can intuitively know the setting status of the editing of the virtual object, that is, whether the virtual object is edited based on the information about the edit control. The information about the edit control with different edit content may be different. The user may further know, based on the information about the edit control, what editing is performed on the virtual object.

Exemplarily, the information about the edit control includes at least one of the following: the edit control, a thumbnail of the edit control, a name of the edit control, or identification information of the edit control.

The identification information of the edit control may be an icon, and the icon indicates that the user edits the virtual object.

FIG. 6 is a schematic diagram of display of the information about the edit control of the virtual object. As shown in FIG. 6, some virtual objects in the virtual scene are provided with the logic, and the edit control inserted into the virtual object is the information about the edit control of the virtual object.

In this embodiment, the position or pose of the information about the edit control may be determined based on the position or pose of the virtual object. The information about the edit control is displayed based on the position or pose of the information about the edit control, so that the information about the edit control can be always displayed at the virtual object. The pose of the virtual object or the information about the edit control includes a position and an posture.

When the virtual object is a static object, such as the tree or the house shown in FIG. 6, the position or pose of the virtual object is unchanged. Correspondingly, the position or pose of the information about the edit control is also unchanged.

When the virtual object is a dynamic object, such as the car shown in FIG. 6, the pose or pose of the virtual object changes. Correspondingly, the position or pose of the information about the edit control is determined based on the position or pose of the virtual object, so that the position or pose of the information about the edit control is consistent with the position or pose of the virtual object.

In this embodiment, after the virtual object is associated with the edit control, the information about the edit control is displayed at the virtual object. The information about the edit control may be displayed at a fixed position of the virtual object, or the display position of the information about the edit control may be determined based on the connection instruction. The information about the edit control may be in contact with a surface of the virtual object, or may not be in contact with the surface of the virtual object. When the information about the edit control is not in contact with the surface of the virtual object, a distance between the information about the edit control and the virtual object is less than a preset distance.

When the information about the edit control is displayed at the fixed position of the virtual object, if the edit control is associated with the virtual object by using a manner of moving the edit control, the information about the edit control is controlled to move to the fixed position of the virtual object when it is detected that the edit control overlaps the virtual object. For example, when the virtual object is a house, the information about the edit control is displayed on a right roof of the virtual object. When the user drags the edit control to move to a bottom of the house and the connecting portion of the edit control overlaps the bottom of the house, the edit control is automatically controlled to be inserted into the right roof of the house.

When the display position of the information about the edit control is determined based on the connection instruction, if the edit control is associated with the virtual object by using a manner of moving the edit control, the information about the edit control is controlled to be displayed at a position where the movement instruction ends when it is detected that the edit control overlaps the virtual object. The position where the movement instruction ends is a position where the move operation is released. That is, the information about the edit control is displayed at the position where the user moves the edit control to.

In this embodiment, after the edit control is associated with the virtual object based on the connection instruction for the edit control and the virtual object, the information about the edit control is further displayed at the virtual object, so that the user can intuitively know the editing status of the virtual object based on the information about the edit control displayed at the virtual object, that is, whether the virtual object is edited and what editing is performed on the virtual object based on the information about the edit control, and the editing efficiency of the virtual object is improved.

After the virtual object is associated with the edit control, the association relationship between the edit control and the virtual object may be canceled. The user inputs a disconnection instruction. The association relationship between the edit control and the virtual object is canceled in response to the disconnection instruction for the edit control and the virtual object. After the association relationship between the edit control and the virtual object is canceled, the edit content corresponding to the edit control is no longer effective on the virtual object.

If the information about the edit control is displayed at the virtual object after the edit control is associated with the virtual object, the information about the edit control is hidden after the association relationship between the edit control and the virtual object is canceled, and the information about the edit control is not displayed at the virtual object, so that the user can know the editing status of the virtual object immediately.

In an implementation, the user may perform a second operation on the virtual object to open the setting panel of the virtual object, and input the disconnection instruction in the setting panel of the virtual object.

In another implementation, after the edit control is associated with the virtual object, if the edit control is displayed at the virtual object, the user may perform the second operation on the edit control to open the setting panel of the edit control, and input the disconnection instruction in the setting panel of the edit control. In this implementation, after the association relationship between the edit control and the virtual object is canceled, the edit control displayed at the virtual object is hidden.

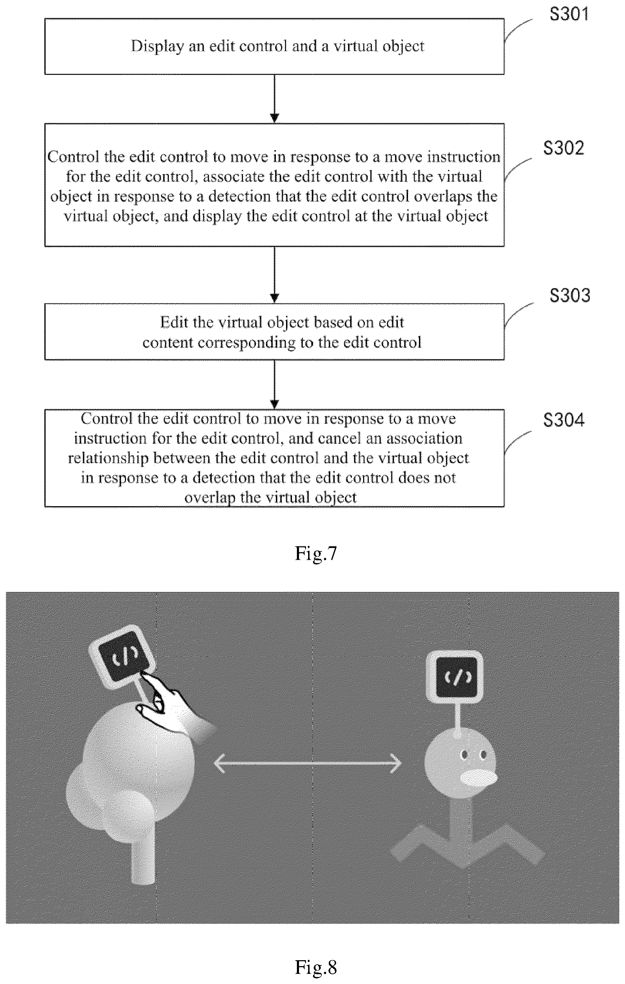

Based on embodiment one and embodiment two, embodiment three of the present application provides a method for editing a virtual object. After the virtual object is associated with the edit control, the information about the edit control is displayed at the virtual object, and the association relationship between the edit control and the virtual object is canceled. For the same content as embodiment one, refer to the description in embodiment one and will not be repeated here. FIG. 7 is a flowchart of a method for editing a virtual object according to embodiment three of the present application. As shown in FIG. 7, the method provided in this embodiment includes the following steps.

In S301, an edit control and a virtual object are displayed.

In S302, the edit control is controlled to move in response to a movement instruction for the edit control, and the edit control is associated with the virtual object in response to a detection that the edit control overlaps the virtual object, and the edit control is displayed at the virtual object.

In S303, the virtual object is edited based on edit content corresponding to the edit control.

In S304, the edit control is controlled to move in response to a movement instruction for the edit control, and an association relationship between the edit control and the virtual object is canceled in response to a detection that the edit control does not overlap the virtual object.

After the association relationship between the edit control and the virtual object is canceled, the edit control is no longer displayed at the virtual object.

Optionally, the edit control has a connecting portion, and the connecting portion overlaps the virtual object when the edit control is associated with the virtual object. Correspondingly, the association relationship between the edit control and the virtual object is canceled in response to a detection that the connecting portion of the edit control does not overlap the virtual object.

In this manner, the edit control is conveniently associated with the virtual object by moving the edit control, and the user can conveniently implement inserting the edit control into any virtual object.

In an actual process, after creating an edit control, the user needs to check an effect of the edit control applied to different virtual objects. According to the method in this embodiment, the edit control may be conveniently associated with different virtual objects, and then the editing effect of the virtual object is checked. When the user needs to associate the edit control with another virtual object, the user only needs to move the edit control from the original virtual object to another virtual object.

FIG. 8 is a schematic diagram of switching of the edit control between different virtual objects. As shown in FIG. 8, the user first associates the edit control with the left virtual object, checks the editing effect of the left virtual object, and then moves the edit control from the left virtual object to the right virtual object, associates the edit control with the right virtual object, and checks the editing effect of the right virtual object. The entire interaction process is convenient and natural.

It should be noted that in this embodiment of the present application, when the edit control is moved, a cursor may be moved to the edit control, and the edit control is dragged by long pressing the cursor. In the XR device, to bring an immersive experience to the user, a virtual model corresponding to a physical controller (which may be a handle) of the XR device is displayed in an extended reality scene. An actual operation of the user in the reality scene is simulated by using the virtual model. The virtual model may be a virtual hand model, a virtual handle, or the like. Correspondingly, the edit control may be dragged by using the virtual model, to implement the movement of the edit control. For example, in the schematic diagram shown in FIG. 8, by controlling the virtual hand model using the physical controller, the user pick up the edit control from the left virtual object and move the edit control to the right virtual object, and then inserts the edit control into the right virtual object, to simulate the operation of the user in the reality scene, so that the interaction process is more natural.

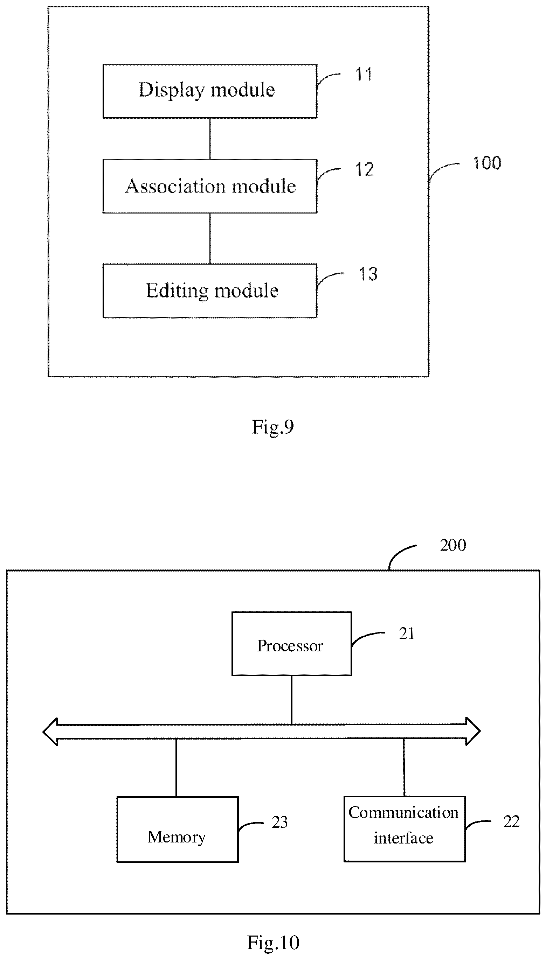

To facilitate better implementation of the method for editing a virtual object in this embodiment of the present application, this embodiment of the present application further provides an apparatus for editing a virtual object. FIG. 9 is a schematic diagram of a structure of a virtual object editing apparatus according to embodiment four of the present application. As shown in FIG. 9, the virtual object editing apparatus 100 may include:
a display module 11 configured to display an edit control and a virtual object;
an association module 12 configured to associate the edit control with the virtual object in response to a connection instruction for the edit control and the virtual object; and
an editing module 13 configured to edit the virtual object based on edit content corresponding to the edit control.

In some embodiments, the display module 11 is further configured to:
after the virtual object is associated with the edit control, display information about the edit control at the virtual object.

In some embodiments, the information about the edit control includes at least one of the following: the edit control, a thumbnail of the edit control, a name of the edit control, or identification information of the edit control.

In some embodiments, the display module 11 is further configured to:
determine a position or a pose of the information about the edit control based on a position or a pose of the virtual object; and
display the information about the edit control based on the position or the pose of the information about the edit control.

In some embodiments, the association module 12 is further configured to:
control the edit control to move in response to a movement instruction for the edit control; and
associate the edit control with the virtual object in response to a detection that the edit control overlaps the virtual object.

In some embodiments, the edit control has a connecting portion, and the connecting portion is configured to connect to a virtual object.

The association module 12 is further configured to:
associate the edit control with the virtual object in response to a detection that the connecting portion of the edit control overlaps the virtual object.

In some embodiments, each of the edit control and the virtual object has a connecting portion, and the association module 12 is further configured to:
connect the connecting portion of the edit control to the connecting portion of the virtual object by using a connection line; and
hide the connection line in response to a completion of the connection.

In some embodiments, the association module 12 is further configured to:
cancel an association relationship between the edit control and the virtual object in response to a disconnection instruction for the edit control and the virtual object.

In some embodiments, after the edit control is associated with the virtual object, the edit control is displayed at the virtual object. The association module 12 is further configured to:
control the edit control to move in response to a movement instruction for the edit control; and
cancel the association relationship between the edit control and the virtual object in response to a detection that the edit control does not overlap the virtual object.

In some embodiments, the edit control has a connecting portion, and the connecting portion overlaps the virtual object when the edit control is associated with the virtual object.

The association module 12 is further configured to:
cancel the association relationship between the edit control and the virtual object in response to a detection that the connecting portion of the edit control does not overlap the virtual object.

In some embodiments, the apparatus further includes a setting module configured to:
display a setting panel of the edit control in response to a first operation on the edit control; and
receive edit content of the edit control that is inputted into the setting panel.

In some embodiments, the edit content corresponding to the edit control includes an editing instruction, and the editing module 13 is further configured to:
determine an instruction corresponding to the virtual object based on the editing instruction corresponding to the edit control.

In some embodiments, the edit content corresponding to the edit control includes an editing parameter, and the editing module 13 is further configured to:
set a parameter of the virtual object based on the editing parameter corresponding to the edit control.

In some embodiments, after the edit control is associated with the virtual object, a display feature of the edit control changes.

In some embodiments, after the edit control is associated with the virtual object, the display module 11 is further configured to:
display prompt information indicating that the edit control is successfully associated with the virtual object.

It should be understood that the apparatus embodiments and the method embodiments may correspond to each other, and reference may be made to the method embodiments for similar descriptions. To avoid repetition, details are not described herein again.

The apparatus 100 in this embodiment of the present application is described above from the perspective of functional modules with reference to the drawings. It should be understood that the functional module may be implemented in hardware or software, or may be implemented by using a combination of hardware and software modules. Specifically, steps of the method embodiments in this embodiment of the present application may be completed by using an integrated logic circuit of hardware in the processor and/or instructions in a software form. The steps of the method disclosed in this embodiment of the present application may be directly implemented as being performed and completed by a hardware decoding processor, or may be implemented as being performed and completed by using a combination of hardware and software modules in the decoding processor. Optionally, the software module may be located in a mature storage medium in the art, such as a random-access memory, a flash, a read-only memory, a programmable read-only memory, an electrically erasable programmable read-only memory, or a register. The storage medium is located in the memory, and the processor reads information in the memory and completes the steps in the foregoing method embodiments in conjunction with the hardware of the processor.

An embodiment of the present application further provides an electronic device. FIG. 10 is a schematic diagram of a structure of an electronic device according to embodiment five of the present application. As shown in FIG. 10, the electronic device 200 may include:
a memory 21 and a processor 22. The memory 21 is configured to store a computer program and transmit program code to the processor 22. In other words, the processor 22 may invoke and run the computer program from the memory 21, to implement the method in this embodiment of the present application.

For example, the processor 22 may be configured to perform the foregoing method embodiments based on instructions in the computer program.

In some embodiments of the present application, the processor 22 may include, but are not limited to, the following:
a general-purpose processor, a digital signal processor (DSP), an application-specific integrated circuit (ASIC), a field-programmable gate array (FPGA) or another programmable logic device, a discrete gate or transistor logic device, a discrete hardware component, or the like.

In some embodiments of the present application, the memory 21 includes but is not limited to:
a volatile memory and/or a non-volatile memory. The non-volatile memory may be a read-only memory (ROM), a programmable read-only memory (PROM), an erasable programmable read-only memory (EPROM), an electrically erasable programmable read-only memory (EEPROM), or a flash. The volatile memory may be a random-access memory (RAM) that is used as an external cache. By way of example but not limitation, many forms of RAMs may be used, for example, a static random-access memory (SRAM), a dynamic random-access memory (DRAM), a synchronous dynamic random-access memory (SDRAM), a double data rate synchronous dynamic random-access memory (DDR SDRAM), an enhanced synchronous dynamic random-access memory (ESDRAM), a synchronous link dynamic random-access memory (SLDRAM), and a direct rambus RAM (DR RAM).

In some embodiments of the present application, the computer program may be divided into one or more modules, and the one or more modules are stored in the memory 21 and executed by the processor 22, to complete the method provided in the present application. The one or more modules may be a series of computer program instruction segments capable of performing a specific function. The instruction segments are used to describe an execution process of the computer program in the electronic device.

As shown in FIG. 10, the electronic device may further include a transceiver 23, and the transceiver 23 may be connected to the processor 22 or the memory 21.

The processor 22 may control the transceiver 23 to communicate with another device. Specifically, the transceiver 23 may send information or data to another device, or receive information or data sent by another device. The transceiver 23 may include a transmitter and a receiver. The transceiver 23 may further include an antenna, and the transceiver 23 may include one or more antennas.

It may be understood that although not shown in FIG. 10, the electronic device 200 may further include a camera module, a wireless fidelity (WiFi) module, a positioning module, a Bluetooth module, a display, a controller, or the like, and details are not described herein again.

It should be understood that components in the electronic device are connected through a bus system. The bus system includes not only a data bus, but also a power bus, a control bus, and a status signal bus.

The present application further provides a computer storage medium. The computer storage medium stores a computer program, and the computer program, when executed by a computer, causes the computer to perform the method according to the foregoing method embodiments. Alternatively, this embodiment of the present application further provides a computer program product including instructions. The instructions, when executed by a computer, cause the computer to perform the method according to the foregoing method embodiments.

The present application further provides a computer program product. The computer program product includes a computer program, and the computer program is stored in a computer-readable storage medium. A processor of an electronic device reads the computer program from the computer-readable storage medium, and the processor executes the computer program, to enable the electronic device to perform a corresponding process in the method for controlling user position in the virtual scene in this embodiment of the present application. For brevity, details are not described herein again.

In the several embodiments provided in the present application, it should be understood that the disclosed system, apparatus, and method may be implemented in other manners. For example, the apparatus embodiments described above are merely schematic. For example, the division of the modules is merely a logical function division. During actual implementation, there may be other division manners. For example, a plurality of modules or components may be combined or integrated into another system, or some features may be ignored or not performed. In addition, the displayed or discussed mutual coupling or direct coupling or communication connection may be implemented through some interfaces, and the indirect coupling or communication connection between the apparatuses or modules may be electrical, mechanical, or in another form.

The modules described as separate components may or may not be physically separate, and the components displayed as the modules may or may not be physical modules, that is, the components may be located in one place or may be distributed on a plurality of network elements. Some or all of the modules may be selected based on actual requirements to achieve the objectives of the solutions of the embodiments. For example, the functional modules in the embodiments of the present application may be integrated into one processing module, or may be physically exist separately, or two or more modules may be integrated into one module.

The foregoing descriptions merely describe specific implementations of the present application, but the protection scope of the present application is not limited thereto. Any person skilled in the art may easily think of changes or replacements within the technical scope disclosed in the present application, and the changes or replacements shall fall within the protection scope of the present application. Therefore, the protection scope of the present application shall be subject to the protection scope of the claims.

## Claims

1. A method for editing a virtual object, comprising:
displaying an edit control and a virtual object;
associating the edit control with the virtual object in response to a connection instruction for the edit control and the virtual object; and
editing the virtual object based on edit content corresponding to the edit control.

2. The method according to claim 1, wherein after the associating the edit control with the virtual object, the method further comprises:
displaying information about the edit control at the virtual object.

3. The method according to claim 2, wherein the information about the edit control comprises at least one of: the edit control, a thumbnail of the edit control, a name of the edit control, or identification information of the edit control.

4. The method according to claim 2 or 3, wherein the displaying information about the edit control at the virtual object comprises:
determining a position or a pose of the information about the edit control based on a position or a pose of the virtual object; and
displaying the information about the edit control based on the position or the pose of the information about the edit control.

5. The method according to any one of claims 1 to 4, wherein the associating the edit control with the virtual object in response to a connection instruction for the edit control and the virtual object comprises:
controlling the edit control to move in response to a movement instruction for the edit control; and
associating the edit control with the virtual object in response to a detection that the edit control overlaps the virtual object.

6. The method according to claim 5, wherein the edit control has a connecting portion, and the connecting portion is configured to connect to a virtual object; and
the associating the edit control with the virtual object in response to a detection that the edit control overlaps the virtual object comprises:
associating the edit control with the virtual object in response to a detection that the connecting portion of the edit control overlaps the virtual object.

7. The method according to any one of claims 1 to 6, wherein each of the edit control and the virtual object has a connecting portion; and
the associating the edit control with the virtual object in response to a connection instruction for the edit control and the virtual object comprises:
connecting the connecting portion of the edit control to the connecting portion of the virtual object by using a connection line; and
hiding the connection line in response to a completion of the connecting.

8. The method according to any one of claims 1 to 7, further comprising:
canceling an association relationship between the edit control and the virtual object in response to a disconnection instruction for the edit control and the virtual object.

9. The method according to claim 8, wherein when the edit control is displayed at the virtual object after the associating the edit control with the virtual object, the canceling an association relationship between the edit control and the virtual object in response to a disconnection instruction for the edit control and the virtual object comprises:
controlling the edit control to move in response to a movement instruction for the edit control; and
canceling the association relationship between the edit control and the virtual object in response to a detection that the edit control does not overlap the virtual object.

10. The method according to claim 9, wherein the edit control has a connecting portion, and the connecting portion overlaps the virtual object when associating the edit control with the virtual object; and
the canceling the association relationship between the edit control and the virtual object in response to the detection that the edit control does not overlap the virtual object comprises:
canceling the association relationship between the edit control and the virtual object in response to a detection that the connecting portion of the edit control does not overlap the virtual object.

11. The method according to any one of claims 1 to 10, further comprising:
displaying a setting panel of the edit control in response to a first operation on the edit control; and
receiving edit content of the edit control that is inputted into the setting panel.

12. The method according to any one of claims 1 to 11, wherein the edit content corresponding to the edit control comprises an editing instruction, and the editing the virtual object based on the edit content corresponding to the edit control comprises:
determining an instruction corresponding to the virtual object based on the editing instruction corresponding to the edit control.

13. The method according to any one of claims 1 to 12, wherein the edit content corresponding to the edit control comprises an editing parameter, and the editing the virtual object based on the edit content corresponding to the edit control comprises:
setting a parameter of the virtual object based on the editing parameter corresponding to the edit control.

14. The method according to any one of claims 1 to 13, wherein after the associating the edit control with the virtual object, a display feature of the edit control changes.

15. The method according to any one of claims 1 to 14, wherein after the associating the edit control with the virtual object, the method further comprises:
displaying prompt information indicating that the edit control is successfully associated with the virtual object.

16. An apparatus for editing a virtual object, comprising:
a display module configured to display an edit control and a virtual object;
an association module configured to associate the edit control with the virtual object in response to a connection instruction for the edit control and the virtual object; and
an editing module configured to edit the virtual object based on edit content corresponding to the edit control.

17. An electronic device, comprising:
a processor and a memory, wherein the memory is configured to store a computer program, and the processor is configured to invoke and run the computer program stored in the memory to perform the method according to any one of claims 1 to 15.

18. A computer-readable storage medium configured to store a computer program, wherein the computer program causes a computer to perform the method according to any one of claims 1 to 15.

19. A computer program product comprising a computer program, wherein when the computer program is executed by a processor, the method according to any one of claims 1 to 15 is implemented.
